# EUROPEAN PATENT SPECIFICATION

(11) **EP 1 727 055 B1**
(45) Date of publication and mention of the grant of the patent: **07.09.2016**
(21) Application number: 05111729.9
(22) Date of filing: 06.12.2005
(51) Int. Cl.: G06F 17/30, H04L 29/06

(54) **Data communication coordination with sequence numbers**
Datenkommunikationskoordination unter Verwendung von Sequenznummern
Coordination de communication de données utilisant des numéros de séquence

(30) Priority: 25.05.2005 US 685008; 15.07.2005 US 182989
(43) Date of publication of application: 29.11.2006
(60) Divisional application: 10012923.8
(73) Proprietor: Microsoft Technology Licensing, LLC, Redmond, WA 98052 (US)
(72) Inventor: Mohamed, Ahmed, Redmond, WA 98052 (US); Raman, Balan Sethu, Redmond, WA 98052 (US); Kruse, David, Redmond, WA 98052 (US)
(74) Representative: Grünecker Patent- und Rechtsanwälte PartG mbB

(56) References cited:
- US-A1- 2004 260 748
- US-A1- 2005 060 442
- TOM TALPEY NETWORK APPLIANCE ET AL: "NFSv4 Session Extensions" IETF STANDARD-WORKING-DRAFT, INTERNET ENGINEERING TASK FORCE, IETF, CH, vol. nfsv4, no. 1, February 2005 (2005-02), XP015038729 ISSN: 0000-0004

## Description

The present application claims priority to United States provisional patent application serial no. 60/685,008, filed May 25, 2005. The present application is related to copending United States patent application entitled "Data Communication Protocol" attorney docket number 5612/311754, filed concurrently herewith, assigned to the assignee of the present invention.

Many data communication protocols that are still in use today, such as the SMB (Server Message Block) protocol, were developed at a time when computing resources were very different, e.g., network bandwidth was typically limited and memory was very precious. As a result, when used in contemporary networks, such protocols may limit overall performance. For example, because of having been designed when memory was limited, small buffer sizes are used, requiring more round trips to communicate large amounts of data.

Moreover, the existing SMB protocol has other limitations that have become apparent over time. For example, the existing SMB protocol is susceptible to denial of service attacks; the design of the protocol makes it difficult to fight these attacks. Likewise, the method for ensuring packet security is cumbersome. Also, there is no current mechanism for performing quality of service-like operations, in that a trusted client, for example, obtains the same server resources as an untrusted client. In sum, while still a frequently-used and valuable protocol, existing SMB versions are less than ideal when used with contemporary network resources.

Tom Talpey Network Applicance et al: "NFSv4 Session Extensions" IETF Standard-Wording-Draft, Internet Engineering Task Force, IETF, CH, vol. Nfsv4, no.1, February 2005, ISSN: 0000-0004 proposes extensions to NFS version 4, which enable it to support long-lived sessions, end-point management and operations atop a variety of RPC transports, including TCP and RDMA. Each request of a client is tagged with an identifier, which is called a slot-id. This identifier must be parsed by NSFv4 when running atop any transport. There is a limit to the number of active requests. When the client issues a new request, it selects a slot-id in the range 0... N-1, where N is the server's current "total requests" limit granted the client on the session over which the request is to be issued. The slot-id must be unused by any of the requests which the client has already active on the session. "Unused" here means the client has no outstanding requests for that slot-id. A sequence-id, which accompanies the slot-id in each request, is important for a second, important check at the server: it must be able to be determined whether a request using a certain slot-id is a retransmit or a new, never before seen request. Therefore, a sequence-id is transmitted along with the slot-id in each request. The slot-id therefore takes over the traditional role of the port number in the server DRC implementation.

US2005/060442 A1 discloses a method for managing data transmission through a network from a source to a destination. The destination imposes a window value on the source which limits the quantity of data packets that can be sent from the source to the destination without receiving an acknowledgement of being received by the destination.

It is therefore the object of the present invention to provide an improved method in a network computing environment having a client and a server that is capable of controlling the client's use of resources; as well as a corresponding computer-readable medium having computer-executable instructions to be executed by a server and a corresponding server side system.

This object is solved by the subject matter of the independent claims.

Preferred embodiments are defined by the dependent claims.

Briefly, various aspects of the present invention are directed towards the use of sequence numbers for client-server communication, such as incorporated into a data communication protocol, to control a client's use of server resources. Various aspects apply the use of sequence numbers to a protocol where ordering is not important, but provide for quality of service, denial of service combating, division of server resources, secure message signing, and other numerous benefits.

A server grants the client credits, and the client uses a credit for sending each command to the server. Each credit corresponds to a sequence number, with the set of sequence numbers forming a valid command window. The server enforces that for each received command, the command includes a sequence number that is within the valid command window and that the sequence number has not been used with another command. The server may also maintain a maximum window size, such that even a client that has credits cannot send a command with a sequence number that beyond a maximum sequence number corresponding to the maximum window size.

In general, upon receiving a command from the client, the server verifies that the sequence number is within the window and has not been used before. The server then eliminates the corresponding sequence number from among those that the client can use, thereby consuming one credit. The server then determines whether to grant the client one or more other credits.

Thus, there is provided a mechanism for limiting use of server resources by controlling a number of credits granted to the client, via a valid operation window containing a unique number for each credit granted to the client. An enforcement mechanism ensures that to allow further server operations on a received command, the command includes a sequence number that is within the valid operation window and that the unique number has not been used with another command An allocation mechanism that controls credits granted to the client and the unique numbers within the valid operation window.

Other advantages will become apparent from the following detailed description when taken in conjunction with the drawings.

### BRIEF DESCRIPTION OF THE DRAWINGS

The present invention is illustrated by way of example and not limited in the accompanying figures in which like reference numerals indicate similar elements and in which:
FIGURE 1 shows an illustrative example of a general-purpose computing environment into which various aspects of the present invention may be incorporated.
FIG. 2 is a block diagram representing an example network environment in which a client communicates with a server in accordance with various aspects of the present invention.
FIGS. 3-13 are representations of client and server data maintained for using sequence numbers, in accordance with various aspects of the present invention.

### DETAILED DESCRIPTION

### EXEMPLARY OPERATING ENVIRONMENT

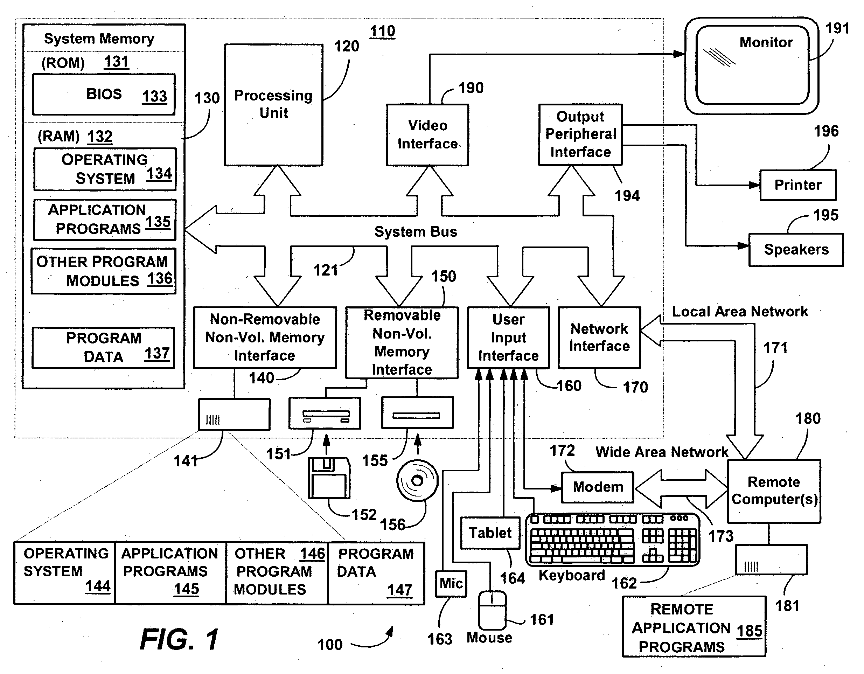

FIGURE 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to: personal computers, server computers, handheld or laptop devices, tablet devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, and so forth, which perform particular tasks or implement particular abstract data types. The invention may also be practiced in distributed computing environments where tasks are performed by remote processing devices that are linked through a communications network. In a distributed computing environment, program modules may be located in local and/or remote computer storage media including memory storage devices.

With reference to FIG. 1, an exemplary system for implementing the invention includes a general purpose computing device in the form of a computer 110. Components of the computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 110 typically includes a variety of computer-readable media. Computer-readable media can be any available media that can be accessed by the computer 110 and includes both volatile and nonvolatile media, and removable and non-removable media. By way of example, and not limitation, computer-readable media may comprise computer storage media and communication media. Computer storage media includes volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by the computer 110. Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136 and program data 137.

The computer 110 may also include other removable/non-removable, volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media, described above and illustrated in FIG. 1, provide storage of computer-readable instructions, data structures, program modules and other data for the computer 110. In FIG. 1, for example, hard disk drive 141 is illustrated as storing operating system 144, application programs 145, other program modules 146 and program data 147. Note that these components can either be the same as or different from operating system 134, application programs 135, other program modules 136, and program data 137. Operating system 144, application programs 145, other program modules 146, and program data 147 are given different numbers herein to illustrate that, at a minimum, they are different copies. A user may enter commands and information into the computer 110 through input devices such as a tablet, or electronic digitizer, 164, a microphone 163, a keyboard 162 and pointing device 161, commonly referred to as mouse, trackball or touch pad. Other input devices not shown in FIG. 1 may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. The monitor 191 may also be integrated with a touch-screen panel or the like. Note that the monitor and/or touch screen panel can be physically coupled to a housing in which the computing device 110 is incorporated, such as in a tablet-type personal computer. In addition, computers such as the computing device 110 may also include other peripheral output devices such as speakers 195 and printer 196, which may be connected through an output peripheral interface 194 or the like.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in FIG. 1. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160 or other appropriate mechanism. In a networked environment, program modules depicted relative to the computer 110, or portions thereof, may be stored in the remote memory storage device. By way of example, and not limitation, FIG. 1 illustrates remote application programs 185 as residing on memory device 181. It will be appreciated that the network connections shown are exemplary and other means of establishing a communications link between the computers may be used.

### DATA COMMUNICATION COORDINATION WITH SEQUENCE NUMBERS

Various aspects of the technology described herein are directed towards a mechanism that may be employed in a data communication protocol, such as a modified version (2.x or greater) of the SMB protocol. In one example implementation generally described herein, the mechanism controls data / command flow in this revised SMB protocol, which is used for Windows^{®}-based file sharing. However, as can be readily appreciated, the present invention is not limited to Windows_{®}-based systems or the SMB protocol, but rather, the example technique is applicable to other file sharing protocols and data communication protocols in general, including those that do not necessarily deal with file data. For example, numerous ways to implement the present invention are feasible, including for use in communication with printers, named data pipes, generic devices and so forth. As such, the present invention is not limited to any of the particular file-based or other examples used herein, but rather may be used numerous ways that provide benefits and advantages in computing in general.

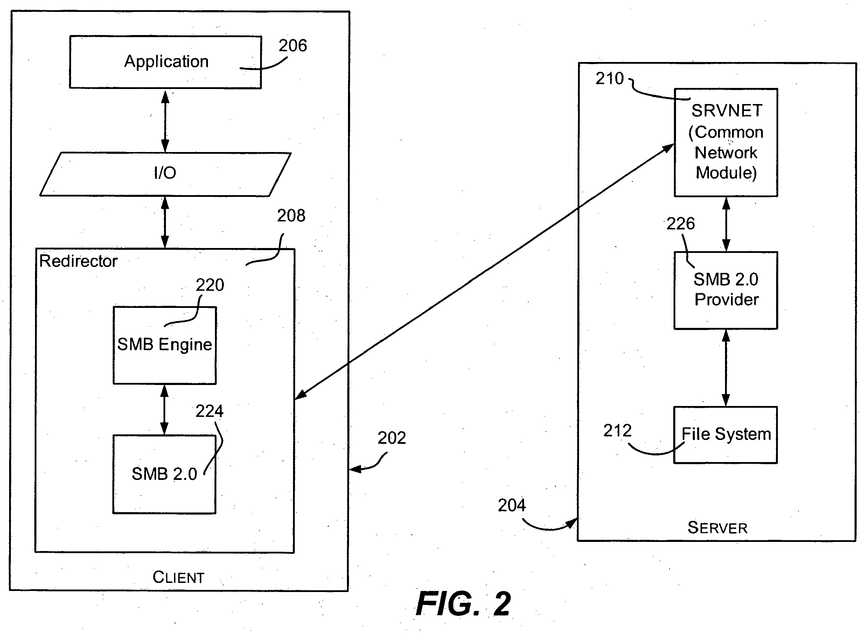

Turning to FIG. 2 of the drawings, there is shown a block diagram representing an example networking environment in which a client 202 communicates with a server 204 through one or more communication channels. Although the functions and components of the client machine 202 and the server 204 are described as being located within two separate computers, such as the main computer system 110 and remote computer system 180 of FIG. 1, the components of these two computers or the functions performed thereby may be provided on one machine, or may be distributed over a number of computers. For example, a computer system may comprise one of variety of network appliance devices, such as print servers or printers themselves, as well as NAS storage devices, and the live.

Network file system commands from an application program 206 are handled by a client redirector component 208, which communicates with a counterpart common network module (SRVNET) 210 to carry out the commands on the file system 212. In general, the client 202 establishes a connection and then negotiates with the server 204 to ultimately set up a session. As part of this, before file system-directed commands are processed, the client and server agree upon a communication protocol. In this example, the agreed-upon protocol for this connection / session is SMB 2.0, whereby a client-side SMB engine 220 employs an SMB 2.0 driver for communications to and from the server 204. The common network module (SRVNET) 210 similarly employs an SMB 2.0 provider 226 for handling client communications over this connection. The provider 226 includes or is otherwise associated with the enforcement mechanism and data structures that ensure that a client uses a proper sequence number, as described below.

Turning to the concept of data communication coordination with sequence numbers, sequence numbers provide a mechanism by which a server may throttle the amount of work a given client can issue against the server. As will be understood, this is accomplished by having the server provide a window of available sequence numbers that the client is allowed to use when identifying a given command. To implement sequence numbers and the desired behavior, the concept of credits is employed, where a credit grants the client the right to consume a portion of server-side resources, including the memory required to back an operation and the CPU cycles it may consume. A client consumes a credit on each command sent, and depending on the server's response, may be granted zero, one or more additional credits. A client is not allowed to reuse a sequence number, and thus the number of commands a client can issue is controlled. Note that monotonically increasing sequence numbers are used for convenience, however any unique (per session / connection) number is equivalent.

For example, if a server grants a client five credits, the server is giving the client the right to submit up to five operations simultaneously. When a server needs to throttle a client, the server does so by reducing the available credits to that client. When a server wants to give a client more resources to work with, the server does so by granting credits.

This gives the server several options. By granting zero credits to a client, the server runs down the resources allocated to that client. Alternatively, by returning one credit, the server maintains the previous window size. By returning more than one credit, the server allows the client more resources for executing commands. One restriction is that the server cannot allow the window size to hit zero (no valid sequence numbers), unless the server has a method of granting a credit out of band, assuming that the protocol is strictly a command-response protocol. Note that if there is a method of granting a client credits without requiring the client to ask for them in the protocol that is using this method, then the restriction does not apply.

Note that a negotiate request / response has a sequence number, (also referred to as a message identifier, or MID) of zero, and a window size of one. In SMB 2.0, the following header facilitates the passing of such information, as further described in the aforementioned related, copending United States patent application entitled "Data Communication Protocol":

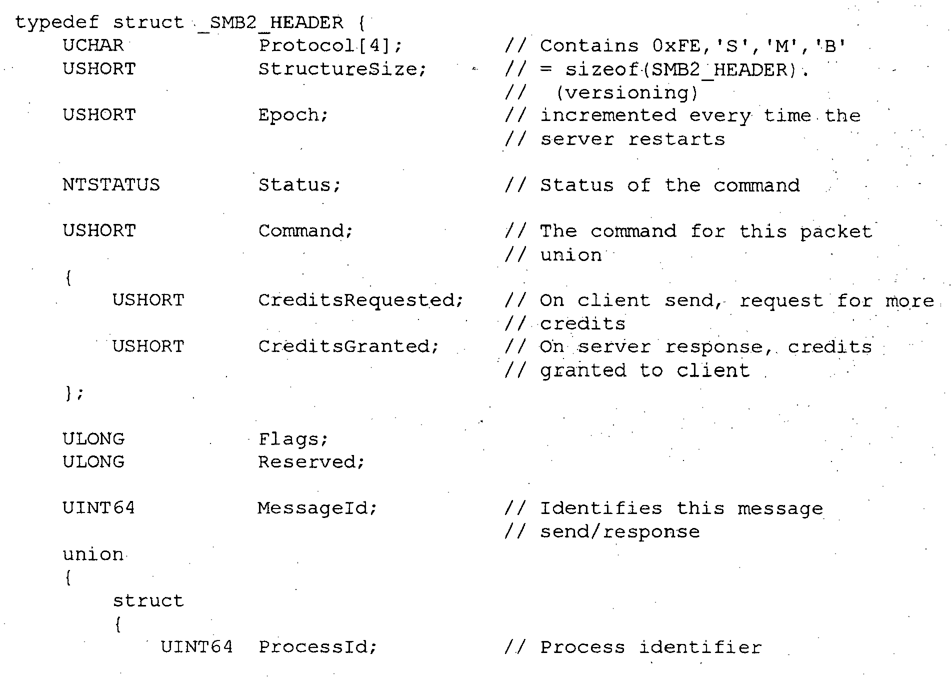

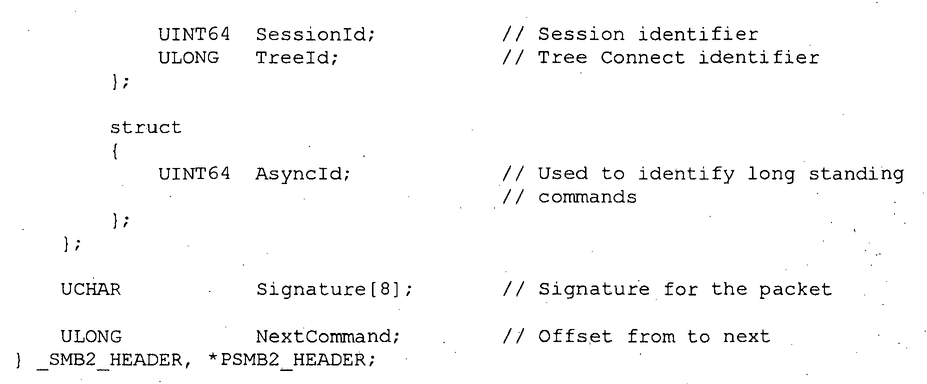

As can be seen from the above header structure, the client requests as many credits as desired, however the server is in control of granting credits to the client. The server thus has the ability to shrink or grow the window based on the client's identity, behavior, or any other attributes or criteria. Sequence numbers also provide a way to uniquely identify a command sent from the client to the server for a given connection.

The client and server begin by establishing a command window. The command window starts by using either a default or a negotiated initial sequence number (ISN) (also referred to as an initial message identifier, or MID) and number of credits (NoC), which represents the range of allowable numbers the server will accept to identify a given command. Thus, the command window initially comprises [ISN, ISN+NoC-1]. For most protocols, the default may be ISN=1, NoC=1, so when first negotiated the command window is simply [1,1], representing that the only sequence number the server will accept to identify a command is one (1).

As communications progress, the client moves the down the numbers in the window by using up numbers within the range. Once a number is used, it cannot be reused, as this is enforced by the server. At the same time, the server may, as determined by the server, extend the end of the window by granting more credits to the client. For example, if the command window is [A, B], when the client sends command A, the valid command window becomes essentially [A+1, B]. When the server responds to command A, it can grant the client anywhere from zero to any practical number of credits. Thus, if the server returned N credits, the valid command window becomes [A+1, B+N].

The use of the sequence numbers in the allowable range is not required to be in order. The protocol is setup to facilitate asynchronous use of the sequence numbers, as long as the number being used is within the valid range. This allows the network protocol to send packets as they are available, instead of trying to force ordered sends. Thus, if sequence number A is claimed for a very large packet, but while the buffers are being prepared sends for A+1 and A+2 come in and are very small, it is legal to send A+1 and A+2 (as long as the end of the window is >= A+2) without waiting for the send of A to start.

Note that if there is a valid command window of [1,5], and packets 2, 3, 4 are sent, the server may grant credits back allowing for a window of [1,8] except {2, 3, 4} (meaning all numbers between 1 and 8 except 2 thru 4). Eventually, the server will likely stop granting credits until packet 1 is sent and the window is allowed to slide. If at this point, the client sends 1, and the server responds granting a credit, than the window becomes [5,9].

The enforcement of the valid command window is done on the server side. This system permits a client-side structure to be as simple as having the current sequence number and the max sequence number, and using interlocked compares and increments as the only required synchronization method.

Thus, a valid command window, also referred to as a valid operation or Valid Op window) comprises the window of valid identifiers that the server will accept. The client sends each subsequent command with the next valid sequence number, (up to its valid credits), and need not maintain a view of the valid window. The client is required to understand the concept of a "Maximum Window Size" as described below). Examples of the use of the valid command / operation window are set forth below.

Any operation that could block for an indefinite amount of time, such as a change-notify or a named-pipe read; or create (as it may pend on an oplock break), is considered a blocking operation. To facilitate such operations, the client may supply an "operation context" value, i.e., a blocking flag, in the command send. The server will then respond when it successfully initiates the operation, allowing the sequence number to be incremented, even though the operation is still in process on the server side. However, the resources held by such long-running operations can often be a subset of the resources required for a normal command. Thus, a server is allowed to determine the maximum number of "Blocking Op Credits" (also referred to as long-operation credits, or LOC) that a client is allowed to consume. Sequence numbers also allow for long-running commands and commands with multiple responses from the server, balanced by controlling how many resources the client can consume.

Thus, an extension to the valid command window is to allow the window to continue to slide as normal, and not be held up by operations that may take an indefinite amount of time. To this end, the client is granted a given number of Blocking Op credits by the server and any operation issued with the Blocking Op flag will consume a Blocking Op credit. When the server receives a command, the server may send an interim response back to the client with such a flag set that acknowledges the receipt of a long-standing command, and returns a long-standing command ID, also referred to as an asynchronous identifier (AsyncID). This response allows the valid command window to slide as it normally would. When the long-standing command is completed, a new response is sent back to the client using the long standing command ID to indicate to which packet it is responding. This send-response-response architecture allows the window to continue to move, and the credit mechanism allows the server to retain control over how many resources the client can consume. The server can even shrink the valid command window if there are a large number of long standing operations in progress from the client.

Alternative implementations include a protocol that allows the client to hint to the server that a long-standing command may be coming. Another implementation of the asynchronous concept also may have the client issue an interim "accept" or the like, such that an async/blocking operation takes the form, "send-rec-send-rec" as opposed to simply send-rec-rec. Note that some underlying transports (e.g., TCP) are often tuned for request-response traffic, and may introduce delays in a request-response-response situation.

Due to the asynchronous nature of the protocol and the transports, the current valid window will not be directly equal to the current minimum sequence ID plus the credits, since some intermediate commands may be received first, or, for example, the command with sequence ID = 1 may take a long time to process. However, the server may place a limit on how large this valid window can grow before it is stopped from growing. Continuing with the above example, the server may specify that the maximum window size is ten (10). This means that the valid operation (command) window may grow to [1,10] if the server receives and processes packets 2,3,4,5, and 6 before its receives or completes processing of packet 1. Thus, the sequence numbers that would be valid are 1,7,8,9,10. However, if the server then receives packet 7 and processes it, the valid operation (command) window will not slide to [1,11], but remains at [1,10] with acceptable sequence numbers of 1,8,9,10. The response on command 8 would indicate a (-1) credit to tell the client that the client is reaching the end of its acceptable limits, that is, its Credits value is now 4. This is one way in which the server prevents the client from ever skipping a given number in the sequence that would prevent the window from sliding nicely. This also demonstrates the value of issuing "Blocking Ops" against a server for commands that will take a long time.

Tracking the valid command window on the server side may be computationally expensive as the server needs to keep track of intersecting sets. To simplify this, one example implementation will establish the maximum window size described above, as the largest the server will ever let the command window become. Once this is established, the server allocates a buffer representing this size, and as commands come in, the value at that location in the buffer is changed. As long as the window size remains less than or equal to the maximum window size, then as the start of the window moves forward, the server moves its buffer pointer forward. Likewise, when the end grows as credits are granted, the server moves its end pointer along the buffer. Arithmetic handles situations where the buffer "wraps" the maximum window size. It is possible to grow the maximum window size dynamically, by allocating a larger buffer and copying the current values into it. Interlocked operations are used to track the status of the valid commands within the window, starting as AVAILABLE. Upon receiving the command from the client, they transition to IN_PROGRESS, and when the response (or interim response for a long-running command case) is sent, it transitions to USED. If the value transitioning to USED is the first value in the window, the window is slid forward until a non-USED value is encountered.

Another alternative allows for the server to revoke credits via an alternate channel or through unsequenced communication. For example, consider that the server has granted the client ten credits, but wants to trim the client down to five credits, which ordinarily will not happen until the client uses five commands. If the client is idle, the server may indicate to the client that it must use five credits in the next N seconds, or it will be in violation and terminated (or lose the credits). This allows the server to throttle down clients without relying on the client to move their own window.

Turning to an explanation of the operation of the invention via the use of various examples, the current state will be set forth in the format below:

| Min: | Current Credits: | Credits: | Valid: [1,5] | Max: |
|---|---|---|---|---|
| 1 | (5,1) | (5,1) | except {} | [1,11] |

The Min column shows the lowest unused client sequence number that the client is allowed to use; current credits are how many credits are granted to the client, in the form (normal credits, blocking op credits). A client consumes a credit on a send, and possibly re-increments on the receive (depending on the response). The next column, simply "Credits" shows the current maximum number of credits the client is allowed.

Valid and Max represent server-side structures for sequence identifier validation; (note that the client need not have any idea about these). Valid shows the Valid Op Window along with the exceptions of sequence identifiers that were already used (e.g., tracked by bitmap), and Max shows the MaxCommandWindow that the client can ever fill before completing the first operation, that is, the operation that would cause the window to shift.

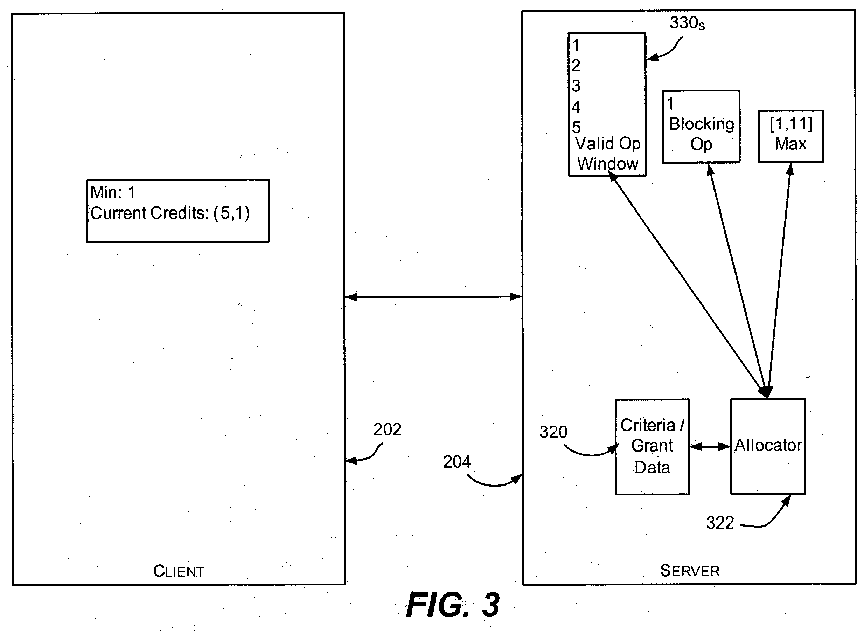

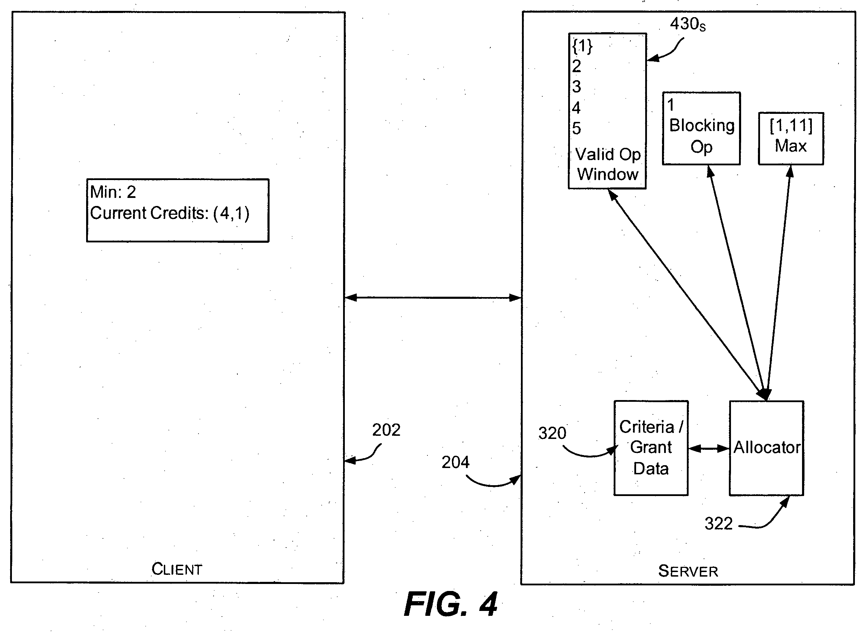

FIGS. 3-9 represent an example on how the valid operation (Valid Op) window 330ₛ grows as maintained at the server 204; (note that in FIGS 3-9, as the valid operation window changes, the first digit of its label changes, e.g., FIG. 3 has a valid operation window labeled 330ₛ, FIG. 4 has a valid operation window labeled 430ₛ, and so forth.

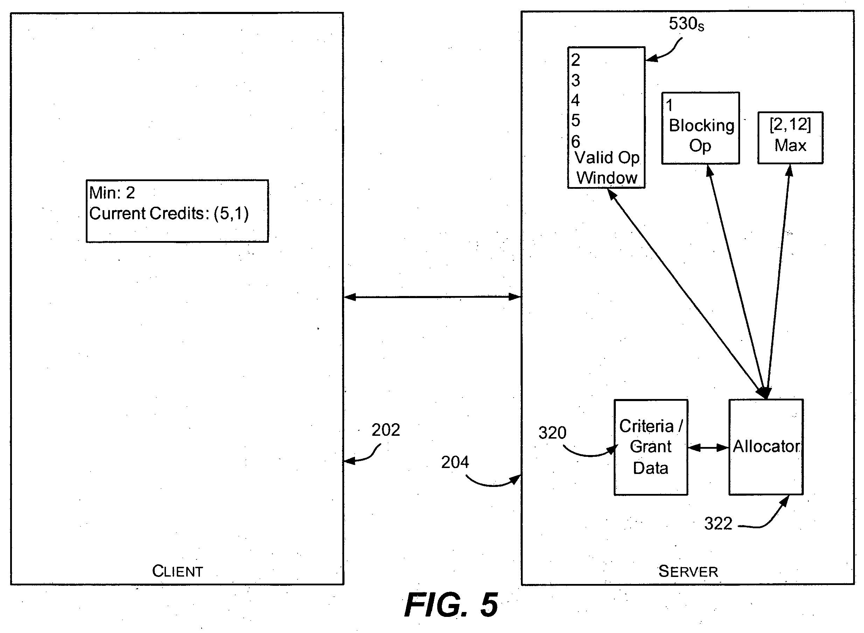

In FIG. 3, a client is granted 5 credits and a starting sequence number (or MID) of 1. Some criteria 320 as generally described above, e.g., the type of client, is used by an allocator component 322 to determine the amount to grant the client. In this example, the current valid operation window is thus [1,5], as represented vertically in FIG. 5 by individual digits in the window 330ₛ. The server 204 thus will accept a packet with sequence number 1,2,3,4 or 5 from this client 202. This is alternatively represented in the above-described format as follows:

| Min: | Current Credits: | Credits: | Valid: [1,5] | Max: |
|---|---|---|---|---|
| 1 | (5,1) | (5,1) | except {} | [1,11] |

The valid op window 320ₛ is used to trivially reject packets; if they lie within the valid op window 320ₛ, the server 204 than checks an internal exception map to guarantee a sequence number has not been already used.

In the typical event of a monotonically increasing receive, the client sends a packet with MID = 1, and the client and server transition to the state represented in FIG. 4 and in the table below; (note that [1,5] are considered valid, but 1 is only truly valid for a response from the server, not for another receipt from the client, which would fail against the Min=2 check first).

| Min: | Current Credits: | Credits: | Valid: [1,5] | Max: |
|---|---|---|---|---|
| 2 | (4,1) | (5,1) | except {1} | [1,11] |

In FIG. 4, the server receives and processes the command with sequence number=1. This means that 1 is no longer a valid sequence number for subsequent commands, as represented by the bracketed { 1 } in the valid / exception column in the table above and in the valid operation window labeled 430ₛ in FIG. 4.

When the server responds, it grants the client an additional (+1) credit on the response, and slides the window, as represented in FIG. 5 and in the table below:

| Min: | Current Credits: | Credits: | Valid: [2,6] | Max: |
|---|---|---|---|---|
| 2 | (5,1) | (5, 1) | except {} | [2,12] |

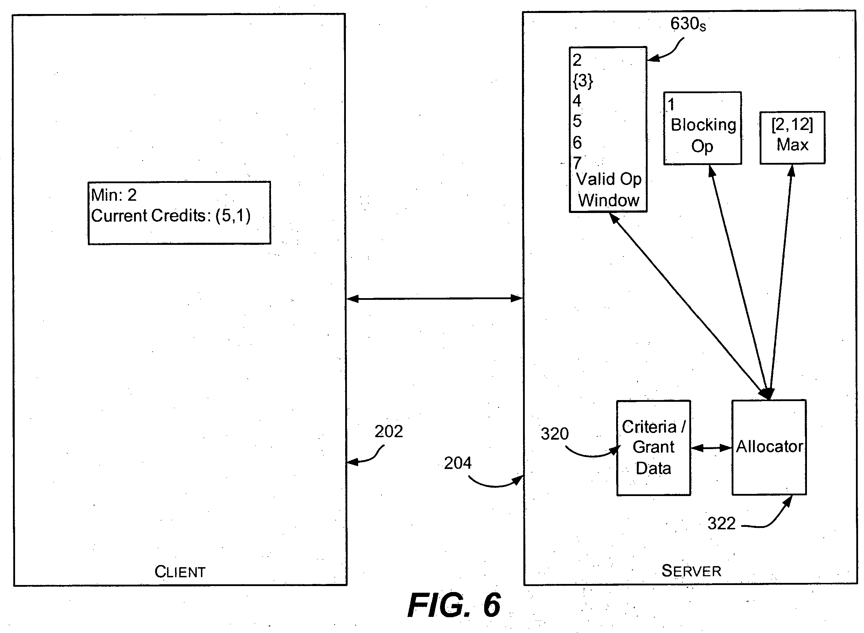

The client now has a valid window of [2,6]. Consider when an out-of-order receive occurs, e.g., the asynchronous send on the transport is such that the server received command 3 before command 2 (and responds to it). The valid op window 630ₛ would then conceptually exist as represented in FIG. 6 and as follows:

| Min: | Current Credits: | Credits: | Valid: [2,7] | Max: |
|---|---|---|---|---|
| 2 | (5,1) | (5, 1) | except {3} | [2,12] |

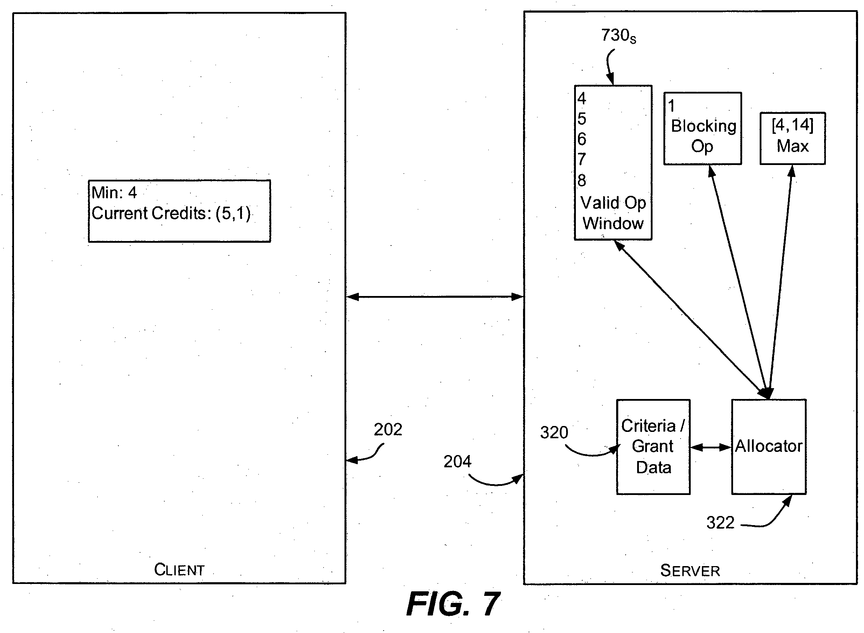

Note that in the table, the valid window extends, but the maximum window does not slide. However, when the server receives command 2 and responds, the window 730ₛ will slide over both, as in FIG. 7 and as below:

| Min: | Current Credits: | Credits: | Valid: [4,8] | Max: |
|---|---|---|---|---|
| 4 | (5,1) | (5,1) | except {} | [4,14] |

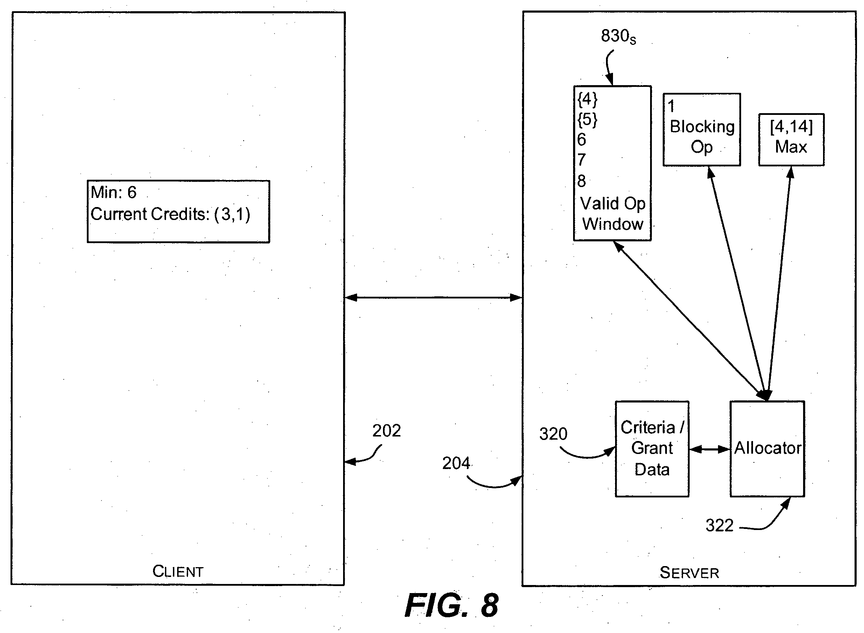

Consider next a malicious client attempting to use up resources on the server by sending commands and refusing the responses. Here the client has sent the server commands 4 and 5, and is refusing the responses. The state becomes as represented in FIG. 8 and as below:

| Min: | Current Credits: | Credits: | Valid: [4,8] | Max: |
|---|---|---|---|---|
| 6 | (3,1) | (5,1) | except {4,5} | [4,14] |

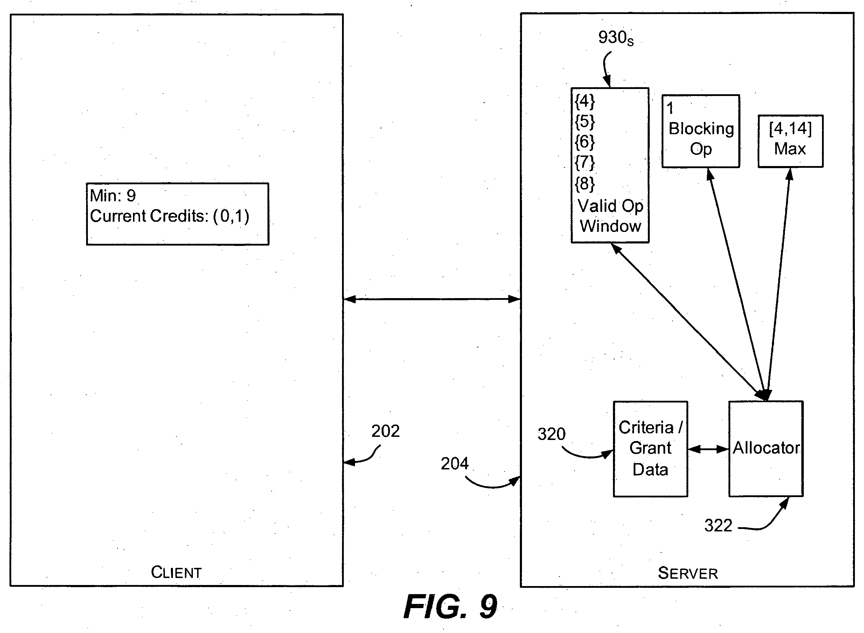

After commands with sequence identifiers 6,7,8 are sent, because of credit enforcement, the client is out of credits and all packets are refused, as represented in FIG. 9 and in the table below:

| Min: | Current Credits: | Credits: | Valid: [4,8] | Max: |
|---|---|---|---|---|
| 9 | (0,1) | (5,1) | except {4,5,6,7,8} | [4,14] |

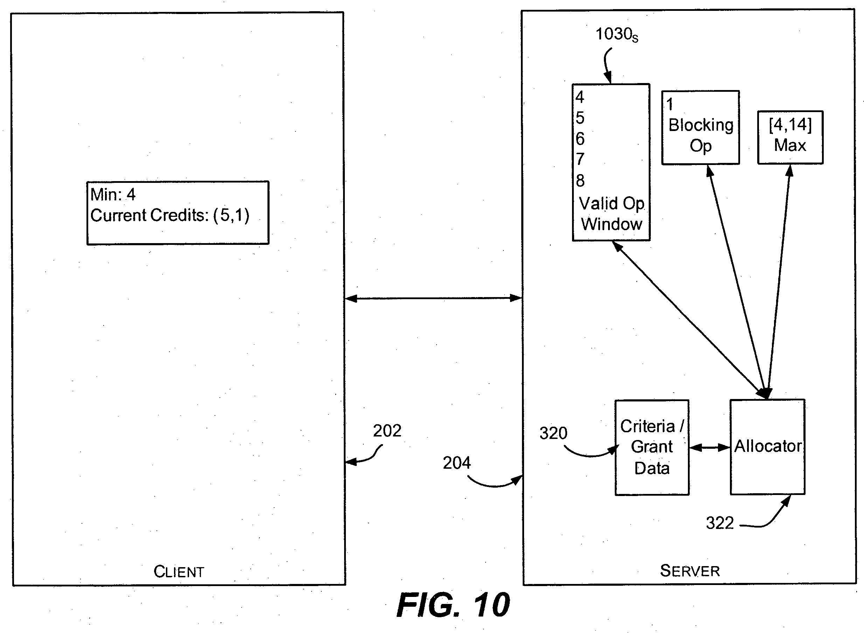

Turning to examples of maximum window enforcement, FIGS. 10-13 and similar tables are used. Consider a malicious client trying to send a packet N+1 and beyond, without sending us packet N. The examples of FIGS. 10-13 will start at the state before the last attacker, that is, FIG. 10 is essentially FIG. 7:

| Min: | Current Credits: | Credits: | Valid: [4,8] | Max: |
|---|---|---|---|---|
| 4 | (5, 1) | (5, 1) | except { } | [4,14] |

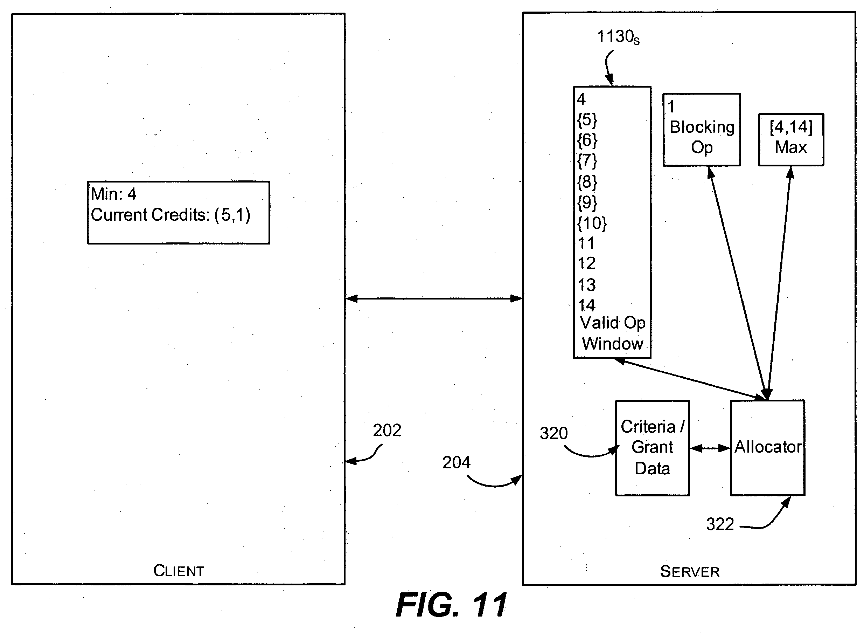

The client sends commands 5,6,7,8,9,10, and the server responds, but without sending command 4. This state is shown in FIG. 11 and in the table below:

| Min: | Current Credits: | Credits: | Valid: [4,14] | Max: |
|---|---|---|---|---|
| 4 | (5,1) | (5,1) | except {5,6,7,8,9,10} | [4,14] |

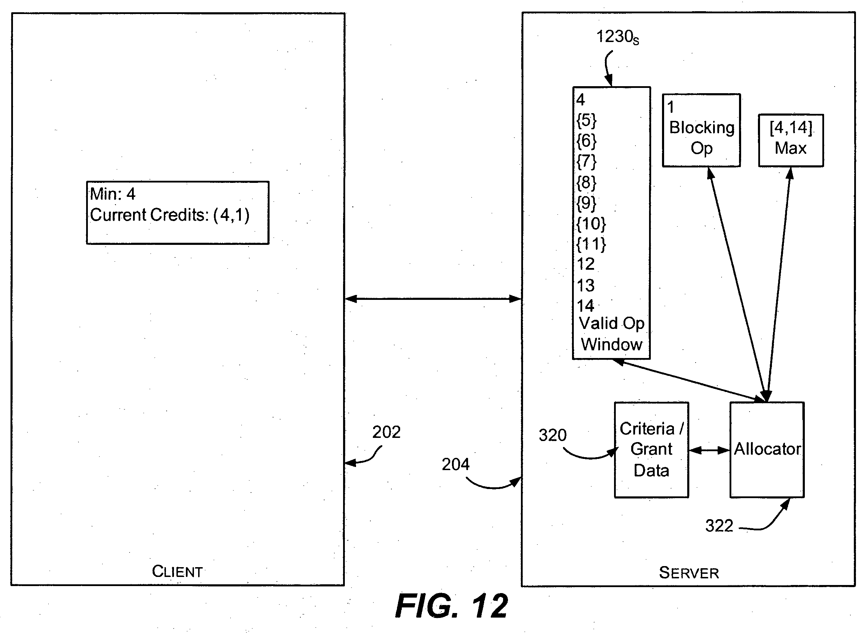

Note that the client still has five credits because there are still five viable slots in the command window. However, when the client sends, and the server responds, to command 11, the state in FIG. 12 and in the table below exists:

| | | | | |
|---|---|---|---|---|
| Min: 4 | Current Credits: (4,1) | Credits: (5,1) | Valid: [4,14] except {5,6,7,8,9,10,11} | Max: [4,14] |

Note that the client then continues with 12, 13, 14. The client's available number of credits has been reduced by one for each command because there is not an available slot in the MaxWindow. This will continue for commands 12,13,14:

| | | | | |
|---|---|---|---|---|
| Min: 4 | Current Credits: (1,1) | Credits: (5,1) | Valid: [4,14] except {5,6,7,8,9,10,11,12,13,14} | Max: [4,14] |

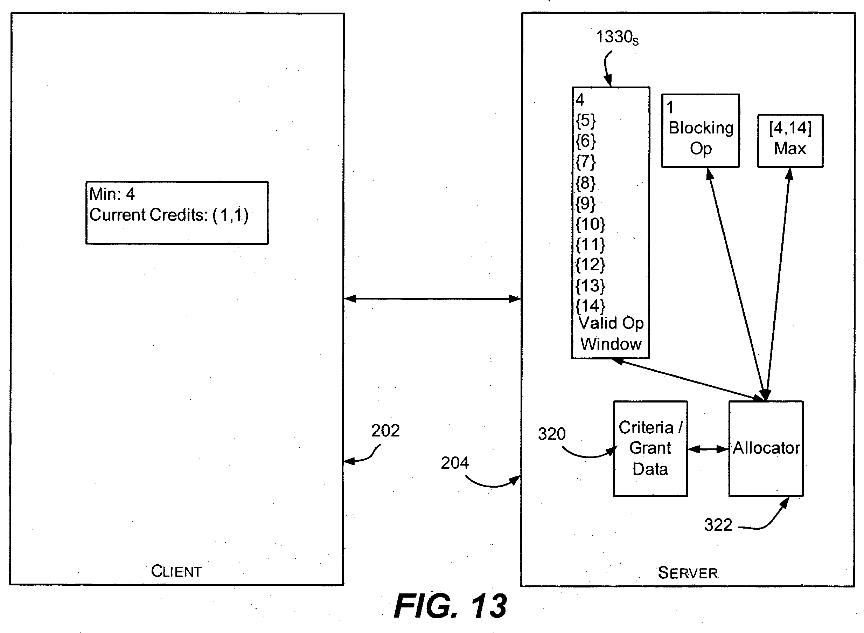

Now the only command the server will accept from the client is command 4, as represented in FIG. 13.

As can be readily appreciated, the attributes of a window of sequence numbers are very advantageous in a number of desirable scenarios. Some of these scenarios include preventing denial-of-service, allowing quality-of-service, providing a common language for the client and server to reference commands that were executed over a given connection, allow for long-running commands and commands with multiple responses from the server, but balance it with controlling how many resources the client can consume, and allowing for continuous use of security signatures.

With respect to preventing denial-of-service, the server may limit the amount of resources a given client connection may consume, until the server has authenticated the client and the client is behaving correctly. For example, by allowing the server to control the resources allocated to a client, when an apparent attack is detected, the server can enter a "panic mode" where it reduces resources available to its clients to a minimum, and grants them back on a trust-basis. The server gives each client a small enough window to allow work to happen, but prevents any single client from overwhelming essentially all of the resources. When the attack is over or reduced, the server can begin re-granting resources to clients that prove trustworthy.

With respect to allowing quality-of-service, the variable window scheme allows the server to scale the amounts of resources allocated to clients based on their identity and/or their behavior. For example, the server may allot more resources to a web server connecting to the file server than to a single user accessing individual documents. As another example, if another server is a database server that is accessing a file server, the file server may weight the number of credits granted higher than that granted to an average user.

Moreover, when controlling quality of service, the allocation of resources to clients may be dynamically altered based on the clients' various needs. This allows the server to grant credits in a completely fair manner, or to take other information into account. An administrator may configure machines on resource priority basis, and this may be utilized and change dynamically as users connect and disconnect.

Sequence numbers also provide a common language for the client and server to reference commands that were executed over a given connection. This assists in the building of various features, including persistent handles. For example, because both the client and the server have agreed on a common language for identifying commands as they are sent and received, that is, the sequence number mechanism, when a disconnect occurs there is a straightforward way upon connection reestablishment for the server and client to determine which commands were received and which were not. Without such a set scheme, it is more difficult to track, particularly when the command identifier is chosen by the client and potentially re-used.

Sequence numbers further allow for continuous use of security signatures, without the extreme performance problems of current models; the sends need not be sequenced, (although the checksum of the whole packet will still need to be calculated, and entire packet received before issuing). With respect to packet signing, replayability is not possible. More particularly, a network protocol that does signing needs to embed an index number into the packet to prevent replayability of the signed packet, otherwise an attacker simply reissues the packet without having to resign it, and the packet remains valid. Other methods include timestamps and the like, however these require some form of synchronization between client and server. If index numbers are used, often the network traffic between the client and the server becomes serialized, because the client must ensure the server receives packet 1 before it sends packet 2.

With a sequence number embedded as the command identifier, and a valid window supported on the server, parallel command sends with sequence numbers in them occur naturally. The server enforces the valid window, so each command can only be issued once, whereby replayability is not a problem, as long as the protocol ensures that the key used for signing is unique for each authenticated connection. Note that if the command identifier rolls over, then replayability could become a problem, and thus sequence numbers on the order of 32 bits or 64 bits are desirable to prevent this, with 64 bits likely more desirable if the re-establishment of broken connections is allowed.

While the invention is susceptible to various modifications and alternative constructions, certain illustrated embodiments thereof are shown in the drawings and have been described above in detail. It should be understood, however, that there is no intention to limit the invention to the specific forms disclosed, but on the contrary, the intention is to cover all modifications, alternative constructions, and equivalents falling within the invention as defined in the claims.

## Claims

1. A method performed in a network computing environment having a client (202) and server (204), the method comprising:
granting the client at least one credit, each credit corresponding to a unique sequence number that the client can use for sending a command to the server, the set of one or more unique sequence numbers forming a valid command window; and
enforcing that for each received command, the command includes a unique sequence number that is within the valid command window and that the unique sequence number has not been used before with another command; wherein
once a sequence number is used, the client is not allowed to reuse said sequence number.

2. The method of claim 1 further comprising, maintaining a maximum window size such that a client (202) that has credits cannot send a command with a sequence number beyond a maximum sequence number corresponding to the maximum window size.

3. The method of claim 1 further comprising, in response to receiving a command, returning an unused sequence number to the client (202) that adjusts the window.

4. The method of claim 3 wherein the unused sequence number is a monotonically increased value relative to a last number in the valid command window.

5. The method of claim 1 wherein each sequence number is a fixed size value 32 bits in length or greater.

6. The method of claim 1 further comprising, granting the client (202) at least one blocking operation credit, and enforcing at the server that the client does not exceed a maximum number of blocking operation credits used.

7. The method of claim 6 further comprising, receiving a command corresponding to a blocking operation credit, returning data indicating that the blocking operation is in progress, along with an identifier for that operation that will be returned upon completion of the blocking operation.

8. The method of claim 7 further comprising, returning an unused sequence number to the client (202) that adjusts the window in response to receiving the blocking operation command.

9. The method of claim 1 further comprising, receiving a request for an additional credit from the client (202), and denying the request to reduce the number of credits available to the client.

10. The method of claim 1 further comprising, revoking at least one credit previously granted to the client (202).

11. The method of claim 10 further comprising, informing the client (202) that at least one credit will be revoked unless used prior to revoking.

12. A computer-readable medium having computer-executable instructions, which when executed in a server (204), cause the server to perform steps, comprising:
granting a client (202) a plurality of credits, each credit corresponding to a unique sequence number that the client uses for sending a command to a server, the sequence numbers forming a valid command window, wherein once a sequence number is used, the client is not allowed to reuse said sequence number; and
upon receiving a command from the client, wherein the command includes a unique sequence number:
verifying that the unique sequence number is within the window and has not been used before with another command;
eliminating the corresponding sequence number from among those that the client can use and consuming one credit; and
determining whether to grant the client at least one other credit.

13. The computer-readable medium of claim 12 having further computer-executable instructions, which when executed cause the server (204) to determine to grant the client at least one other credit, and to adjust the valid command window with corresponding sequence numbers based on each credit granted.

14. The computer-readable medium of claim 12 having further computer-executable instructions, which when executed cause the server (204) to determine to not grant the client another credit thereby dynamically reducing the credits available to the client.

15. The computer-readable medium of claim 12 having further computer-executable instructions, which when executed cause the server (204) to determine to not grant the client another credit by evaluating a maximum window size.

16. The computer-readable medium of claim 12 having further computer executable instructions, which when executed cause the server (204) to revoke at least one credit previously granted to the client.

17. The computer-readable medium of claim 16 having further computer executable instructions, which when executed cause the server (204) to inform the client that at least one credit will be revoked unless used prior to revoking.

18. A server-side system in a network computing environment having a client (202) and server (204), the server-side system comprising:
a mechanism adapted to limit use of server resources by controlling a number of credits granted to the client, the mechanism being adapted to:
establish a valid operation window, containing a unique sequence number for each credit granted to the client; wherein
said mechanism comprises an enforcement mechanism adapted to ensure that to allow further server operations on a received command, the command includes a unique sequence number that is within the valid operation window and that the unique sequence number has not been used before with another command, wherein once a sequence number is used, the client is not allowed to reuse said sequence number; and
said mechanism comprises an allocation mechanism adapted to control credits granted to the client and the unique sequence numbers within the valid operation window.

19. The system of claim 18 wherein the mechanism adapted to limit use of server resources is associated with a server message block protocol driver.

20. The system of claim 18 wherein the mechanism further includes means adapted to revoke at least one credit previously granted to the client.

## Patentansprüche

1. Verfahren, das in einer Netzwerk-Rechenumgebung mit einem Client (202) und einem Server (204) durchgeführt wird, wobei das Verfahren umfasst:
Zuweisen zu dem Client wenigstens eines Credits, wobei jeder Credit einer einzigartigen Sequenznummer entspricht, die der Client für das Senden eines Befehls an den Server verwenden kann, wobei ein Satz aus einer oder mehreren einzigartigen Sequenznummern ein gültiges Befehlsfenster bildet, und
Erzwingen für jeden empfangenen Befehl, dass der Befehl eine einzigartige Sequenznummer enthält, die in dem gültigen Befehlsfenster liegt, und dass die einzigartige Sequenznummer nicht zuvor mit einem anderen Befehl verwendet wurde,
wobei, nachdem eine Sequenznummer verwendet wurde, der Client diese Sequenznummer nicht erneut verwenden darf.

2. Verfahren nach Anspruch 1, das weiterhin das Aufrechterhalten einer maximalen Fenstergröße umfasst, sodass ein Client (202), der über Credits verfügt, keinen Befehl mit einer Sequenznummer senden kann, die über eine maximale Sequenznummer in Entsprechung zu der maximalen Fenstergröße hinausgeht.

3. Verfahren nach Anspruch 1, das weiterhin, in Reaktion auf das Empfangen eines Befehls, das Ausgeben einer nicht verwendeten Sequenznummer an den Client (202), die das Fenster anpasst, umfasst.

4. Verfahren nach Anspruch 3, wobei die nicht verwendete Sequenznummer ein monoton erhöhter Wert relativ zu einer letzten Nummer in dem gültigen Befehlsfenster ist.

5. Verfahren nach Anspruch 1, wobei jede Sequenznummer ein Wert mit einer fixen Größe ist, die eine Länge von 32 Bits oder mehr aufweist.

6. Verfahren nach Anspruch 1, das weiterhin das Zuweisen zu dem Client (202) wenigstens eines Blockierungsoperations-Credits und das Erzwingen, an dem Server, dass der Client eine maximale Anzahl von verwendeten Blockierungsoperations-Credits nicht überschreitet, umfasst.

7. Verfahren nach Anspruch 6, das weiterhin das Empfangen eines Befehls in Entsprechung zu einem Blockierungsoperations-Credit und das Ausgeben von Daten, die angeben, dass die Blockierungsoperation gerade durchgeführt wird, zusammen mit einer Kennzeichnung für diese Operation, die nach dem Abschluss der Blockierungsoperation ausgegeben wird, umfasst.

8. Verfahren nach Anspruch 7, das weiterhin das Ausgeben einer nicht verwendeten Sequenznummer an den Client (202), die das Fenster anpasst, in Reaktion auf das Empfangen des Blockierungsoperationsbefehls umfasst.

9. Verfahren nach Anspruch 1, das weiterhin das Empfangen einer Anfrage für einen zusätzlichen Credit von dem Client (202) und das Ablehnen der Anfrage, um die Anzahl von für den Client verfügbaren Credits zu reduzieren, umfasst.

10. Verfahren nach Anspruch 1, das weiterhin das Widerrufen wenigstens eines zuvor zu dem Client (202) zugewiesenen Credits umfasst.

11. Verfahren nach Anspruch 10, das weiterhin das Informieren des Clients (202) darüber, dass wenigstens ein Credit widerrufen wird, sofern dieser nicht vor dem Widerrufen verwendet wurde, umfasst.

12. Computerlesbares Medium mit computerausführbaren Befehlen, die bei einer Ausführung in einem Server (204) veranlassen, dass der Server die folgenden Schritte durchführt:
Zuweisen zu einem Client (202) einer Vielzahl von Credits, wobei jeder Credit einer einzigartigen Sequenznummer entspricht, die der Client für das Senden eines Befehls an einen Server verwendet, wobei die Sequenznummern ein gültiges Befehlsfenster bilden, wobei, nachdem eine Sequenznummer verwendet wurde, der Client diese Sequenznummer nicht erneut verwenden darf, und
nach dem Empfangen eines Befehls von dem Client, wobei der Befehl eine einzigartige Sequenznummer enthält:
Verifizieren, dass die einzigartige Sequenznummer in einem Fenster liegt und zuvor nicht mit einem anderen Befehl verwendet wurde,
Beseitigen der entsprechenden Sequenznummer aus denjenigen, die der Client verwenden kann, und Verbrauchen eines Credits, und
Bestimmen, ob dem Client wenigstens ein anderer Credit zugewiesen wird.

13. Computerlesbares Medium nach Anspruch 12, das weiterhin computerausführbare Befehle aufweist, die bei einer Ausführung veranlassen, dass der Server (204) bestimmt, dem Client wenigstens einen weiteren Credit zuzuweisen, und das gültige Befehlsfenster mit entsprechenden Sequenznummern basierend auf jedem zugewiesenen Credit anpasst.

14. Computerlesbares Medium nach Anspruch 12, das weiterhin computerausführbare Befehle aufweist, die bei einer Ausführung veranlassen, dass der Server (204) bestimmt, dem Client keinen weiteren Credit zuzuweisen, um dadurch die für den Client verfügbaren Credits dynamisch zu reduzieren.

15. Computerlesbares Medium nach Anspruch 12, das weiterhin computerausführbare Befehle aufweist, die bei einer Ausführung veranlassen, dass der Server (204) bestimmt, dem Client keinen weiteren Credit zuzuweisen, indem er eine maximale Fenstergröße evaluiert.

16. Computerlesbares Medium nach Anspruch 12, das weiterhin computerausführbare Befehle aufweist, die bei einer Ausführung veranlassen, dass der Server (204) wenigstens einen zuvor zu dem Client zugewiesenen Credit widerruft.

17. Computerlesbares Medium nach Anspruch 16, das weiterhin computerausführbare Befehle aufweist, die bei einer Ausführung veranlassen, dass der Server (204) den Client darüber informiert, dass wenigstens ein Credit widerrufen wird, sofern dieser nicht vor dem Widerrufen verwendet wurde.

18. Serverseitiges System in einer Netzwerk-Rechenumgebung mit einem Client (202) und einem Server (204), wobei das serverseitige System umfasst:
einen Mechanismus, der ausgebildet ist zum Begrenzen der Nutzung von Serverressourcen durch das Steuern der Anzahl von Credits, die zu dem Client zugewiesen werden, wobei der Mechanismus ausgebildet ist zum:
Herstellen eines gültigen Operationsfensters, das eine einzigartige Sequenznummer für jeden zu dem Client zugewiesenen Credit aufweist,
wobei der Mechanismus einen Erzwingungsmechanismus umfasst, der ausgebildet ist zum Sicherstellen, dass für das Erlauben von weiteren Serveroperationen auf einem empfangenen Befehl der Befehl eine einzigartige Sequenznummer enthält, die in dem gültigen Operationsfenster liegt, und dass die einzigartige Sequenznummer zuvor nicht mit einem anderen Befehl verwendet wurde, wobei, nachdem eine Sequenznummer verwendet wurde, der Client diese Sequenznummer nicht erneut verwenden darf, und
wobei der Mechanismus einen Zuweisungsmechanismus umfasst, der ausgebildet ist zum Steuern von zu dem Client zugewiesenen Credits und der einzigartigen Sequenznummern in dem gültigen Operationsfenster.

19. System nach Anspruch 18, wobei der Mechanismus ausgebildet ist zum Begrenzen der Nutzung von mit einem Servernachrichtenblock-Protokolltreiber assoziierten Serverressourcen.

20. System nach Anspruch 18, wobei der Mechanismus weiterhin Einrichtungen enthält, die ausgebildet sind zum Widerrufen wenigstens eines zuvor zu dem Client zugewiesenen Credits.

## Revendications

1. Procédé effectué dans un environnement informatique en réseau comportant un client (202) et un serveur (204), le procédé comprenant :
l'attribution au client d'au moins un crédit, chaque crédit correspondant à un numéro de séquence unique que le client peut utiliser pour envoyer un ordre au serveur, l'ensemble d'un ou de plusieurs numéros uniques de séquence formant une fenêtre valide d'ordres, et
l'application de ce que pour chaque ordre reçu, l'ordre inclut un numéro unique de séquence qui se trouve à l'intérieur de la fenêtre valide d'ordres et de ce que le numéro unique de séquence n'a pas été utilisé auparavant avec un autre ordre, dans lequel
une fois qu'un numéro de séquence est utilisé, il n'est pas permis au client de réutiliser ledit numéro de séquence.

2. Procédé selon la revendication 1, comprenant en outre le maintien d'une taille maximale de fenêtre telle qu'un client (202) qui possède des crédits ne peut pas envoyer un ordre avec un numéro de séquence au-delà d'un numéro maximal de séquence correspondant à la taille maximale de fenêtre.

3. Procédé selon la revendication 1, comprenant en outre, en réponse à la réception d'un ordre, le renvoi d'un numéro de séquence inutilisé au client (202), lequel ajuste la fenêtre.

4. Procédé selon la revendication 3, dans lequel le numéro de séquence inutilisé est une valeur augmentée de façon monotone par rapport à un dernier numéro dans la fenêtre valide d'ordres.

5. Procédé selon la revendication 1, dans lequel chaque numéro de séquence représente une valeur de taille fixe de 32 bits de longueur ou plus.

6. Procédé selon la revendication 1, comprenant en outre l'attribution au client (202) d'un crédit d'opération de blocage ainsi que l'application au niveau du serveur de ce que le client ne dépasse pas un nombre maximal de crédits d'opération de blocage utilisés.

7. Procédé selon la revendication 6, comprenant en outre la réception d'un ordre correspondant à un crédit d'opération de blocage, le renvoi de données indiquant que l'opération de blocage est en cours, en même temps qu'un identificateur pour cette opération, lequel sera renvoyé à l'achèvement de l'opération de blocage.

8. Procédé selon la revendication 7, comprenant en outre le renvoi d'un numéro de séquence inutilisé au client (202), lequel ajuste la fenêtre en réponse à la réception de l'ordre d'opération de blocage.

9. Procédé selon la revendication 1, comprenant en outre la réception d'une demande de crédit supplémentaire émanant du client (202) ainsi que le refus de la demande de réduction du nombre de crédits disponibles pour le client.

10. Procédé selon la revendication 1, comprenant en outre la révocation d'au moins un crédit précédemment accordé au client (202).

11. Procédé selon la revendication 10, comprenant en outre l'information faite au client (202) de ce qu'au moins un crédit sera révoqué à moins qu'il soit utilisé avant la révocation.

12. Support pouvant être lu par ordinateur comportant des instructions exécutables par ordinateur qui, lorsqu'elles sont exécutées dans un serveur (204), amènent le serveur à exécuter des étapes comprenant :
l'attribution à un client (202) d'une pluralité de crédits, chaque crédit correspondant à un numéro unique de séquence qu'utilise le client pour envoyer un ordre à un serveur, les numéros de séquence formant une fenêtre valide d'ordres, où il n'est pas permis au client d'utiliser ledit numéro de séquence une fois le numéro utilisé, et
à la réception d'un ordre émanant du client, l'ordre incluant un numéro unique de séquence :
la vérification de ce que le numéro de séquence unique se trouve à l'intérieur de la fenêtre et n'a pas été utilisé auparavant avec un autre ordre,
l'élimination du numéro de séquence correspondant parmi ceux que le client peut utiliser, et la consommation d'un crédit, et
la détermination de ce qu'il faut accorder au client au moins un autre crédit.

13. Support pouvant être lu par ordinateur selon la revendication 12, comprenant d'autres d'instructions exécutables qui, lorsqu'elles sont exécutées, amènent le serveur (204) à déterminer d'accorder au client au moins un autre crédit, et d'ajuster la fenêtre valide d'ordres avec les numéros de séquence correspondants sur la base de chaque crédit accordé.

14. Support pouvant être lu par ordinateur selon la revendication 12, comprenant d'autres d'instructions exécutables qui, lorsqu'elles sont exécutées, amènent le serveur (204) à déterminer de ne pas accorder au client un autre crédit, ce qui réduit ainsi dynamiquement les crédits disponibles pour le client.

15. Support pouvant être lu par ordinateur selon la revendication 12, comprenant d'autres d'instructions exécutables qui, lorsqu'elles sont exécutées, amènent le serveur (204) à déterminer de ne pas accorder au client un autre crédit en évaluant une taille maximale de fenêtre.

16. Support pouvant être lu par ordinateur selon la revendication 12, comprenant d'autres d'instructions exécutables qui, lorsqu'elles sont exécutées, amènent le serveur (204) à révoquer au moins un crédit précédemment accordé au client.

17. Support pouvant être lu par ordinateur selon la revendication 12, comprenant d'autres d'instructions exécutables qui, lorsqu'elles sont exécutées, amènent le serveur (204) à informer le client qu'au moins un crédit sera révoqué à moins qu'il soit utilisé avant la révocation.

18. Système du côté serveur dans un environnement informatique en réseau comportant un client (202) et un serveur (204), le système du côté serveur comprenant :
un mécanisme conçu pour limiter l'utilisation de ressources serveur en contrôlant un nombre de crédits accordés au client, le mécanisme étant conçu pour :
établir une fenêtre valide d'opération contenant un numéro unique de séquence pour chaque crédit accordé au client, où
ledit mécanisme comprend un mécanisme d'application conçu pour garantir que pour permettre d'autres opérations du serveur sur un ordre reçu, l'ordre inclut un numéro unique de séquence qui se trouve à l'intérieur de la fenêtre valide d'opération et que le numéro de séquence unique n'a pas été utilisé auparavant avec un autre ordre, où une fois qu'un numéro de séquence est utilisé, le client n'est plus autorisé à réutiliser ledit numéro de séquence, et
ledit mécanisme comprend un mécanisme d'attribution conçu pour contrôler les crédits accordés au client et les numéros uniques de séquence à l'intérieur de la fenêtre valide d'opération.

19. Système selon la revendication 18, dans lequel le mécanisme conçu pour limiter l'utilisation des ressources serveur est associé à un pilote de protocole de bloc de messages du serveur.

20. Système selon la revendication 18, dans lequel le mécanisme inclut en outre un moyen conçu pour révoquer au moins un crédit précédemment accordé au client.
